# EUROPEAN PATENT SPECIFICATION

(11) **EP 2 234 368 B1**
(45) Date of publication and mention of the grant of the patent: **29.04.2020**
(21) Application number: 08871559.4
(22) Date of filing: 19.12.2008
(51) Int. Cl.: H04L 29/06, H04L 29/08

(54) **CONTENT DELIVERY DEVICE, SYSTEM AND CONTENT-ON-DEMAND METHOD**
INHALTSLIEFERUNGSVORRICHTUNG, SYSTEM UND VERFAHREN FÜR INHALT AUF ANFRAGE
DISPOSITIF, SYSTÈME DE DISTRIBUTION DE CONTENU ET PROCÉDÉ POUR CONTENU À LA DEMANDE

(30) Priority: 11.01.2008 CN 200810000455
(43) Date of publication of application: 29.09.2010
(73) Proprietor: ZTE Corporation, Shenzhen, Guangdong 518057 (CN)
(72) Inventor: XIA, Hongfei, Guangdong 518057 (CN)
(74) Representative: Novagraaf Technologies
(86) International application number: PCT/CN2008/073618
(87) International publication number: WO 2009/092248

(56) References cited:
- WO-A1-2007/101473
- CN-A- 1 889 506
- CN-A- 1 964 483
- US-A1- 2004 184 432
- "Telecommunications and Internet Converged Services and Protocols for Advanced Networking (TISPAN); Service Layer Requirements to Integrate NGN Services and IPTV; Draft ETSI TS 181 016", TECHNICAL SPECIFICATION, EUROPEAN TELECOMMUNICATIONS STANDARDS INSTITUTE (ETSI), 650 ROUTE DES LUCIOLES, SOPHIA ANTIPOLIS CEDEX, F-06921, FRANCE, vol. TISPAN, no. V0.0.8, 1 July 2007 (2007-07-01), XP014040884,

## Description

### Filed of the Invention

The present invention relates to communication field, in particular to a content delivery device and system, content-on-demand method and network architecture.

### Background of the Invention

At present, International Telecommunications Union-Telecommunications Standardization Sector (ITU-T) has basically determined the research frame structure of the first stage of the Next Generation Network (NGN). Besides an administration stratum, the NGN further comprises a user stratum, a transmission stratum, a service control stratum and an application stratum and so on.

### IP Multimedia System

IP Multimedia System (IMS) is the main function entity set of the service control stratum. This system is based on the Session Initiation Protocol (SIP), and has been regarded as the main technology and system architecture merged with the next generation network. Wherein, the registration, identification, authentication, quality of service (QoS) management and assurance of the user and terminal device can be realized through the IMS. Simultaneously, the IMS supports various user access technologies, user mobility management, and the intercommunication with other traditional networks or the next generation network, so as to support the mergence of services.

### Interactive Network Television

Interactive Network Television, also called as Internet Protocol Television (IPTV), is a general name of providing the users with the services such as live broadcast, broadcast-on-demand, and time shift playback of the television program supporting interactive ability through an IP bearing network. The IPTV accesses a broadband network through a telecommunication channel by utilizing an Asymmetric Digital Subscriber Line (ADSL) or an Ethernet, transmits television signal through internet protocol, takes television set plus set top box (STB) as the main terminal, and provides various digital media service including television programs.

At present, only the ITU-T and TISPAN organization are doing some researches on the mergence of the NGN and IPTV, and the present researches are still at the stage of discussing the primary architecture, and the present technical scheme does not provide specific solutions on how the IPTV realizes real mergence with the NGN, or how to provide unified services in the next generation network. Therefore, an operator can not carry out unified operation and management to IPTV services, and the operation and management costs of the IPTV are comparatively high.

WO 2007101473A1 provides a method of time-shifting and chase-play for an IPTV system; US 2004184432A1 provides a method for controlling streaming services between a terminal(UE) and a stream server(SS) via a communication network; however, the above mentioned problem still remains unsolved. "Telecommunications and Internet Converged Services and Protocols for Advanced Networking (TISPAN); Service Layer Requirements to Integrate NGN Services and IPTV; Draft ETSI TS 181 016",TECHNICAL SPECIFICATION, EUROPEAN TELECOMMUNICATIONS STANDARDS INSTITUTE (ETSI), 650 ROUTE DES LUCIOLES, SOPHIA ANTIPOLIS CEDEX, F-06921, FRANCE, vol. TISPAN, no. V0.0.8, 1 July 2007 (2007-07-01), XP014040884, describes a related system of the prior art.

### Summary of the Present Invention

The present invention is proposed in consideration of the problems existed in related technology that a new technology is needed to solve how the IPTV realizes real mergence with the NGN and how to provide unified services in the next generation network. The main object of the present invention is to provide a content delivery scheme used for the NGN to solve at least one of the problems in related technology. The invention is defined by a content delivery device according to claim 1, a content-on-demand method according to claim 6 and a content delivery system according to claim 9. Further embodiments are defined by the dependent claims.

According to the embodiment of the present invention, the present invention provides a content delivery device which is used to realize a content delivery function in next generation network. The content delivery device is located in the service stratum on top of the transmission stratum, is connected between the service control function entity and the transmission function entity, and is used to deliver the content from application functions module of next generation network to a terminal user.

Furthermore, the content delivery device is also used to distribute, buffer or store the content from the application functions module.

The device further comprises a content delivery control function module and a plurality of content delivery and storage function modules, wherein, the content delivery control function module is used to control the operations of the content delivery and storage function modules, and the content delivery and storage function modules are used to buffer or store the content from the application functions module under the control of the content delivery control function module, and delivers the buffed or stored content to the terminal user.

Wherein, the content delivery control function module further comprises a distribution control function entity and a location control function entity, wherein, the distribution control function entity is used to establish content distribution strategy based on document or stream, manage the content distribution among the plurality of content delivery and storage function modules, and optimize the content distribution strategy by utilizing the information of the location control function entity, and the location control function entity is used to identify the content delivery and storage function module according to a preset condition, wherein the module can deliver the content to the optimum location information of the terminal user.

Wherein, the preset condition comprise at least one of the following: the distribution information of the content delivery and storage function module, the load status of the content delivery and storage function, the location information of the terminal user, and the processing capacity information of the terminal user.

Moreover, the content delivery and storage function module further comprises a delivery function entity, a distribution function entity and a buffer and storage function entity, wherein, the delivery function entity is used to transmit the content to be delivered to the terminal user, upload the content to the content delivery and storage function module, or download the content from at least one content delivery and storage function module by the terminal user; the distribution function entity is used to distribute the content among the content delivery and storage function entities, and processes the media control information from the terminal user or the service control function entity; the buffer and storage function entity is used to buffer or store distributed content.

Wherein, the media control information is used to notify the content delivery and storage function module to execute at least one of the following operations: play, pause, fast forward and fast backward.

Moreover, the above-mentioned content is the content after preparation and processing, wherein the preparation and processing comprise at least one of the following operations: content aggregation, content management, content processing, metadata processing, and content encryption. The above-mentioned preparation and processing can be executed by the application function module or by an external third party of the next generation network.

According to another embodiment of the present invention, the present invention provides a content-on-demand method used in next generation network. The next generation network comprises a terminal user, a service control function entity and the above-mentioned content delivery device.

The method comprises: a first step wherein the terminal user initiates an on-demand request asking for playing corresponding content; a second step wherein the content delivery device obtains the URL information of the content, and returns the URL information to the service control function entity; and a third step wherein the service control function entity requests to distribute network resource, and the content delivery device plays the content for the terminal user in the case of the network resource is distributed successfully.

Wherein, the next generation network further comprises an application function module. The first step can further include: the terminal user sends the on-demand request to the service control function entity, wherein, the on-demand request carries the user information of the terminal user; the service control function entity authenticates the terminal user according to the user information in the on-demand request, and sends the request for obtaining the URL information for delivering to the content delivery device via the application function module if the authentication is successful.

In addition, in the second step, the content delivery device obtains the URL information in response to the request for obtaining the URL information for delivering.

Additionally, the next generation network further comprises a resource admittance function entity which is characterized in that in the third step the service control function entity requests the resource admittance function entity to distribute the network resource.

According to another embodiment of the present invention, the present invention provides a content delivery system.

The system comprises a service control function entity and a content delivery device, wherein, the service control function entity is located in the service stratum, is connected with the content delivery device and the terminal user, is used to send the request for obtaining the URL information of the content to the content delivery device after the terminal user initiates the on-demand request asking for playing corresponding content, request for the network resource after obtaining the URL information, and send the obtained URL information to the terminal user after the network resource is distributed successfully;

The content delivery device is located in the service stratum, is used to send the URL information to the service control function entity in response to the request for obtaining the URL information of the content,, and play the content for the terminal user after the terminal user receives the URL information.

Wherein, the service control function entity is also used to authenticate the terminal user according to the user information of the terminal user carried in the on-demand request, and send the request for obtaining the URL information of the content to the content delivery device in the case of the authentication is successful.

In addition, the system further comprises a resource admittance control function entity, wherein, the resource admittance control function entity is located in the transmission stratum, is used to distribute the network resource when the service control function entity requests for distributing the network resource, and notifies the distribution result of the network resource to the service control function entity.

Added to this, the system further comprises an application support function entity and a service support function entity which are both located in the service stratum, wherein, the application support function entity comprises an application function module which is connected with the service control function entity, is used to forward the request for obtaining the URL information of the content from the service control function entity to the content delivery device, and forward the URL information from the content delivery device to the service control function entity.

In virtue of the technical scheme of the present invention, various service systems such as IPTV can be merged with the next generation network, various multimedia services of the next generation network are developed expediently and the vacancy of the related technology is filled up.

### Brief Description of the Drawings

The drawings in the specification provide a further understanding to the present invention and constitute a part of the application. The exemplary embodiments of the present invention and the explanation thereof are given thereafter by way of illustration only, and thus are not limitative of the present invention, and wherein:
Fig.1 is a block diagram of the next generation network after the content delivery device is added according to the device embodiment of the present invention;
Fig.2 is a block diagram of the content delivery device according to the device embodiment of the present invention;
Fig.3 is a specific block diagram of the content delivery device according to the device embodiment of the present invention;
Fig.4 is a flowchart of the content-on-demand method according to the method embodiment of the present invention;
Fig.5 is a signaling flowchart of detailed treating process of the content-on-demand method according to the method embodiment of the present invention;
Fig.6 is a block diagram of the content delivery system according to the system embodiment of the present invention;
Fig.7 is a specific block diagram of the content delivery system according to the system embodiment of the present invention.

### Detailed Description

### General description of functions

In the embodiment of the present invention, the present invention adds a content delivery device (function entity) on the basis of existing NGN architecture, merges the multimedia services such as IPTV with the NGN network, provides the on-demand method of IPTV service after the merging, and renovates existing NGN network architecture through completely merging the interactive network television system with the next generation network architecture (NGN IMS or NGN non-IMS). Concretely, content delivery functions are added in the service stratum of existing NGN network architecture. In this way, the terminal user can realize roaming and nomadic functions, and the core competitiveness of the IPTV system is improved.

The embodiments of the present invention and the features of the embodiments can be inter-combined in the case of non-conflict.

### Device embodiment

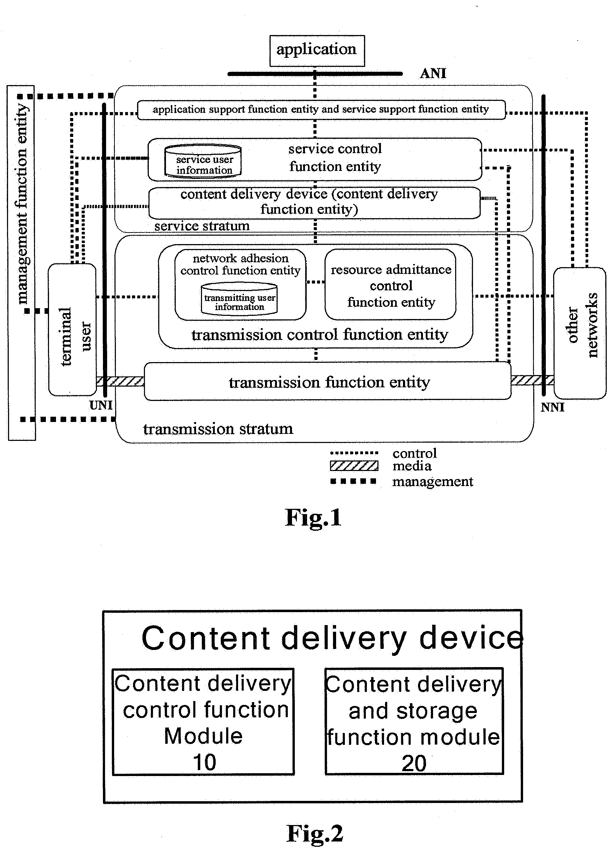

In the device embodiment, the present invention provides a content delivery device (also called content delivery function (CDF) entity) which is used to realize content delivery function in NGN. As shown in Fig.1, the content delivery device can be located in the service stratum on top of the transmission stratum, be connected between the service control function entity and the transmission function entity, and be used to deliver the content from application functions module of NGN to a terminal user. The terminal user herein can also be called end-user function entity (EU for short), wherein, the location of the terminal user in NGN is as shown in Fig.1. The content delivery device will be detailed hereafter in combination with the NGN architecture block diagram as shown in Fig.1.

The NGN comprises a transmission stratum and a service stratum, wherein, the service stratum comprises an application support function entity, a service support function entity, a service control function entity (module), and a content delivery device; the transmission stratum comprises a transmission control function entity and a transmission function entity. Wherein, the transmission control function entity comprises a network adhesion control function entity and a resource admittance control function entity (RACF). In addition, the system further comprises a management function entity. The functions of each entity/device will be detailed hereafter.

The content delivery device according to the device embodiment is added in the service stratum of existing NGN architecture. The device is located under the service control function stratum of the service stratum, and above the transmission stratum. In addition, in NGN system, the terminal user can be any one multimedia terminal. For example, the terminal user can be an IPTV terminal function entity, and the IPTV terminal function entity can be a set top box realized through hardware, or a terminal device having set top box functions realized through software.

Wherein, the service control function entity (module) refers to a Core IMS function entity in the IPTV system of NGN IMS network architecture. The function entity provides a session control mechanism, provides the identification and authentication of the terminal user, and requests the resource admittance control function entity to distribute resources. In addition, the service control function entity (module) is also interacted with the terminal user, the application support function entity, the service support function entity and the content delivery function to make sessions under session description protocol and complete the functions such as security, QoS, charging, roaming.

The application support function entity and the service support function entity are connected with application through an application network interface (ANI). The service control function entity further comprises service user information.

The resource admittance control function entity is used to distribute resources, and can also be interacted with the terminal user, the application support function entity, the service support function entity and the content delivery function to make sessions under session description protocol and complete the functions such as security, QoS, charging, roaming.

The NGN can be connected with other networks through a network interface (NNI).

In addition, the NGN further comprises an application function (AS for short) entity (module) (e.g. it can be IPTV application function in the case of the IPTV service). The application function can be located in the sub-function of the internal function of the application support function entity and the service support function entity as shown in Fig.1, and be used for the terminal user to select and purchase the content, process the request from the terminal user, authenticate the application, execute application logic (the application such as broadcast-on-demand, live broadcast, and application selection, etc), process the information such as content metadata. Concretely, in the IPTV system based on the NGN architecture, the application function can communicate with the content delivery and storage module, and process the request of selecting the address information of the content delivery and storage module from the service control function.

The content delivery device is used to distribute, buffer or store the content from the application function module. During the specific processing and implementation, the above-mentioned content from the application function module can be the content which has been prepared and processed. Alternatively, the preparation and the processing comprise at least one of the following operations: content aggregation, content management, content processing, metadata processing, and content encryption. Wherein, the preparation and processing of the content can be completed in the application function module of the NGN or by an external third party of the NGN. That is to say, the content from the application function module can be the content locally stored in the application function module, and can also be the content which is from an external third party of the NGN and is forwarded (distributed) by the application function module after having been prepared and processed by the third party.

Fig.2 shows the content delivery device according to the embodiment of the present invention. As shown in Fig.2, the content delivery device according to the embodiment of the present invention comprises: a content delivery control function module 10, used to control the operations of content delivery and storage function modules 20; one or more content delivery and storage function modules 20, used to buffer or store the content distributed by the application function module under the control of the content delivery control function module 10, and deliver the buffered or stored content to the terminal user. The structure of the device is as shown in Fig.2, wherein, for the purpose of the clearness, the Fig.2 shows only one content delivery and storage function module. Those skilled in the art should understand that the content delivery and storage function module 20 can be disposed in a distributed manner.

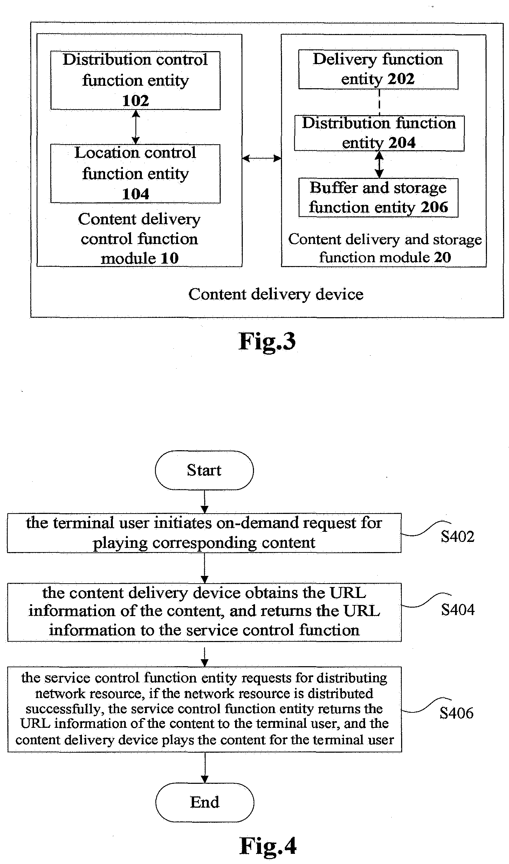

Fig.3 shows the preferable block diagram of the content delivery device according to the embodiment of the present invention. As shown in Fig.3, on the basis of the device as shown in Fig.2, the content delivery control function module 10 can comprise a distribution control function entity 102 and a location control function entity 104, and the content delivery and storage function module 20 can comprise a delivery function entity 202 and a distribution function entity 204.

The distribution control function entity 102 is used to establish a distribution strategy based on document or stream, manage the content distribution among the plurality of content delivery and storage function modules, and optimize the distribution strategy of the content by utilizing the information of the location control function entity 104; the location control function entity 104 is used to identify the content delivery and storage function module 20 according to a preset condition, wherein the content delivery and storage function module 20 has optimum location information for delivering the content to the terminal user.

Wherein, the preset condition comprise at least one of the following: the distribution information of the content delivery and storage function module, the load status of the content delivery and storage function, the location information of the terminal user, and the processing capacity information of the terminal user. The media control information is used to notify the content delivery and storage function module to execute at least one of the following operations: play, pause, fast forward and fast backward.

The delivery function entity 202 is used to transmit (deliver) the content to be delivered to the terminal user, and is used for the upload and download of the terminal user, namely provides support for the treating process of transmitting the content the terminal user needs to transmit to the content delivery device (content delivery function entity), or the treating process of downloading the stored content from the content delivery device to the terminal user. Concretely, the delivery function entity 202 is used for terminal user uploading the content to or downloading the content from at least one content delivery and storage function module 20. The distribution function entity 204 is used to distribute (forward) the content among the content delivery and storage function modules 20, and the processing media control message from the terminal user or the service control function entity. The buffer and storage function entity 206 is connected with the distribution function entity 204, and is used to buffer or store the distributed content.

### Method embodiment

In the method embodiment, the present invention provides a content-on-demand method which is used for NGN, wherein, the NGN can comprise the terminal user, the service control function entity, and foresaid content delivery device.

Fig.4 shows the flowchart of the content-on-demand method according to the embodiment of the present invention. As shown in Fig.4, the method comprises: step S402, the terminal user initiates on-demand request for playing corresponding content; step S404, the content delivery device obtains the URL information of the content, and returns the URL information to the service control function; and step S406, the service control function entity requests to distribute network resource, and if the network resource is distributed successfully, the service control function entity returns the URL information of the content to the terminal user, and then the content delivery device plays the content for the terminal user.

Wherein, the NGN further comprises an application function module. Accordingly, the step S402 can further include: the terminal user sends the on-demand request to the service control function entity, wherein, the on-demand request carries the user information of the terminal user; the service control function entity authenticates the terminal user according to the user information in the on-demand request, and sends the request message for obtaining the URL information for delivering to the content delivery device through the application support function entity and the service support function entity if the authentication is successful. Accordingly, in step S404, the content delivery device obtains the URL information in response to the request message for obtaining the URL information for delivering.

Added to this, the NGN further comprises a resource admittance function entity. Accordingly, in step S406, the service control function entity requests the resource admittance function entity to distribute the network resource.

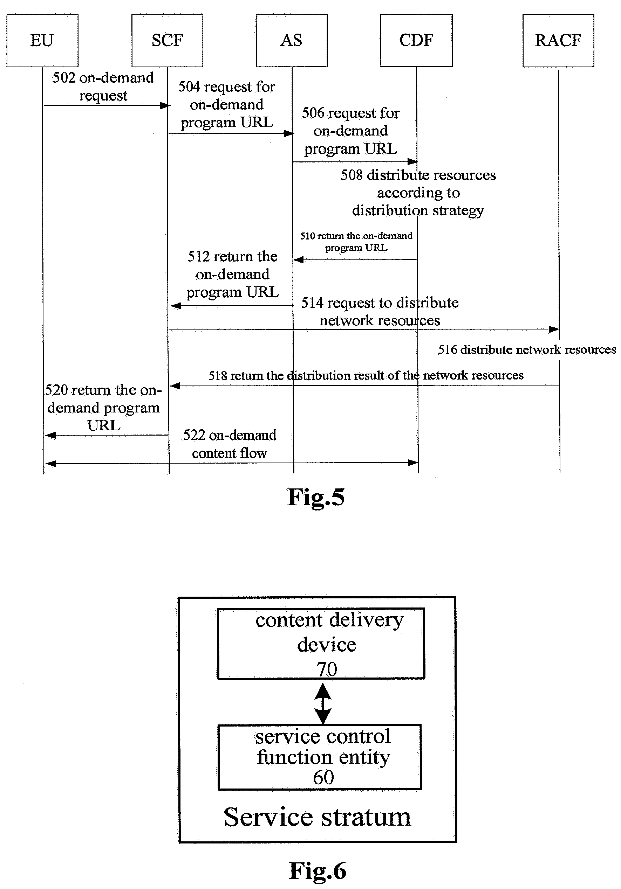

Taking the IPTV program-on-demand as an example, the embodiment will be detailed hereafter in combination with the flowchart as shown in Fig.5.

As shown in Fig.5, when the IPTV program-on-demand is carried out by using the method according to the embodiment, the specific treating processes are as follows (step 502-step 522).

Step 502, the terminal user sends on-demand request to the service control function entity (SCF);
Step 504, the service control function entity receives the on-demand request, identifies and authenticates the user according to the user information of the terminal user carried in the on-demand request. After the identification and authentication are successful, the service control function entity sends a request message for on-demand URL to the IPTV application function module (AS);
Step 506, AS forwards the request message for the URL of the on-demand program to the content delivery module (CDF);
Step 508, the content delivery control module selects a proper content delivery and storage function (for obtaining URL information) according to the distribution strategy (e.g. the information such as load status in the storage module, selecting the proper content delivery and storage function for providing service), and distributes the local resources in the content delivery and storage function;
Step 510, the content delivery function entity (CDF, namely, the foresaid content delivery device) returns the URL information of a media server providing on-demand channel service to the AS;
Step 512, the IPTV application function returns the URL information of the media server providing on-demand program service to the service control function entity (SCF);
Step 514, the SCF requests the resource admittance control function entity (RACF) to distribute network resource information;
Step 516, RACF module distributes the network resource information;
Step 518, RACF module returns the distributed network resource information to the SCF;
Step 520, SCF returns the URL address of the media server providing the on-demand program service to the ITF;
Step 522, ITF is interacted with SCF, CDF and so on to establish RTSP link which provides on-demand stream service for the ITF.

What needs to be explained is that the live broadcast process of the IPTV program is similar to the on-demand process of the IPTV program, so that details will not be repeated any longer.

### System embodiment

In the system embodiment, the present invention provides a content delivery system which can be located in the NGN architecture as shown in Fig.1.

Fig.6 is the block diagram of the content delivery system according to the embodiment of the present invention. As shown in Fig.6, the content delivery system according to the embodiment comprises a service control function entity and a content delivery device.

The service control function entity 60 is located in the service stratum, is connected with the content delivery device 70 and the terminal user, is used to send the request for obtaining the URL information of the corresponding content to the content delivery device after the terminal user initiates the on-demand request for playing corresponding content, requests for the network resource after obtaining the URL information, and sends the URL information to the terminal user after the network resource is distributed successfully.

The content delivery device 70 is located in the service stratum, is used to respond to the request for obtaining the URL information of the corresponding content, sends the URL information to the service control function entity, and plays the corresponding content for the terminal user after the terminal user receives the URL information.

Furthermore, the service control function entity is also used to authenticate the terminal user according to the user information of the terminal user carried in the on-demand request, and sends the request for obtaining the URL information of the content to the content delivery device if the authentication is successful.

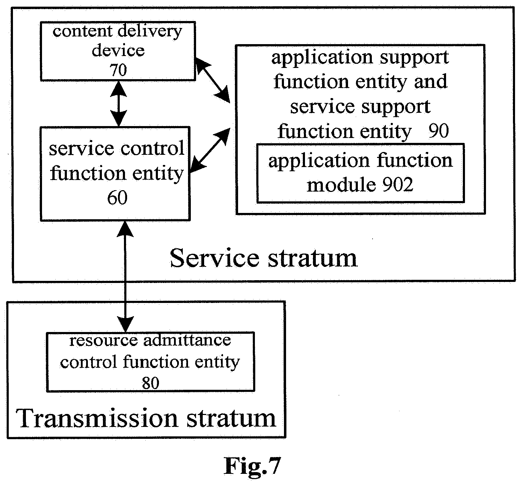

Fig.7 shows the preferable block diagram of the content delivery device according to the embodiment of the present invention. As shown in Fig.7, the content delivery system further comprises a resource admittance control function entity 80, an application support function entity and a service support function entity 90.

The resource admittance control function entity 80 is located in the transmission stratum, is used to distribute the network resource when the service control function entity requests for distributing the network resource, and notifies the distribution result of the network resource to the service control function entity.

The application support function entity and the service support function entity 90 are located in the service stratum, which comprises an application function module 902. The application function module 902 can be connected with the service control function entity 60, is used to forward the request for obtaining the URL information of the content from the service control function entity to the content delivery device, and forwards the URL information from the content delivery device 70 to the service control function entity 60.

According to another embodiment of the present invention, the present invention provides a network architecture in next generation network. The network architecture comprises a transmission stratum and a service stratum, wherein, the service stratum further comprises the above-mentioned content delivery function device which is used to realize the information transmission between the transmission stratum and a terminal user.

Through changing the architecture of the NGN, namely, adding the content delivery device (function entity), the present invention really realizes to merge the multimedia services such as IPTV in the NGN network, and provides the on-demand method of the IPTV service after the merging. Furthermore, It should be understood for those skilled in the art that the present invention not only can be used to merge the IPTV service in NGN network, but also can be used for a plurality of other services. Therefore, various services of next generation network are developed expediently and the vacancy of the related technology is filled up.

Compared with prior art, the present invention completely merges the interactive network television system in the NGN architecture (NGN IMS or NGN non-IMS), and renovates service stratum of existing NGN network architecture through adding the content delivery functions. The IPTV system based on the architecture can realize to renovate the NGN network. The terminal user can realize the roaming and nomadic functions, and the core competitiveness of the IPTV system is improved.

## Claims

1. A content delivery device (70), used to realize a content delivery function in the next generation network, wherein the next generation network comprises a transmission stratum and a service stratum, the service stratum comprises a service control function entity (60), and the transmission stratum comprises a transmission function entity, wherein the content delivery device (70), located in the service stratum on top of the transmission stratum and connected between the service control function entity (60) and the transmission function entity, is configured to deliver the content from an application function module (902) of the next generation network to a terminal user;
wherein the content delivery device (70) is further configured to distribute, buffer or store the content from the application function module (902); **characterized in that** the content delivery device (70) comprises a content delivery control function module (10) and an at least one content delivery and storage function module (20), wherein,
the content delivery control function module (10) is configured to control the operation of the content delivery and storage function module (20);
the at least one content delivery and storage function module (20) is configured to buffer or store the content from the application function module (902) under the control of the content delivery control function module (10), and deliver the buffered or stored content to the terminal user; wherein the content delivery control function module (10) further comprises a distribution control function entity (102) and a location control function entity (104), wherein
the distribution control function entity (102) is configured to establish a content distribution strategy based on a document or stream, manage the content distribution among the at least one content delivery and storage function module (20), and optimize the content distribution strategy by utilizing the information of the location control function entity (104);
the location control function entity (104) is configured to identify a content delivery and storage function module (20) which has optimum location information for delivering the content to the terminal user according to a preset condition.

2. The content delivery device (70) according to Claim 1, wherein the preset condition comprise at least one of the following: the distribution information of the at least one content delivery and storage function module (20), the load status of the content delivery and storage function module (20), the location information of the terminal user, and the processing capacity information of the terminal user.

3. The content delivery device (70) according to Claim 1, wherein the content delivery and storage function module (20) further comprises:
a delivery function entity (202), configured to transmit the content to be delivered to the terminal user, to upload content to the at least one content delivery and storage function module (20) or to download content from the at least one content delivery and storage function module (20) by the terminal user;
a distribution function entity (204), configured to distribute the content among the content delivery and storage function entities, and process a media control message from the terminal user or the service control function entity (60); and
a buffer and storage function entity (206), configured to buffer or store the distributed content.

4. The content delivery device (70) according to Claim 3, wherein the media control message is used to notify the content delivery and storage function module (20) to execute at least one of the following operations: play, pause, fast forward and fast backward.

5. The content delivery device (70) according to any one of Claims 1-4, wherein the content is the content having been prepared and processed, the preparation and processing include at least one of the following: content aggregation, content management, content processing, metadata processing, and content encryption, the preparation and processing are executed by the application function module (902) or by an external third party of the next generation network.

6. A content-on-demand method, used in the next generation network, the next generation network comprising a terminal user, a service control function entity (60) and the content delivery device (70) according to any one of Claims 1-5, wherein the method comprises:
a first step (S402) wherein the terminal user initiates an on-demand request for playing corresponding content;
a second step (S404) wherein the content delivery device (70) obtains the URL information of the content, and returning the URL information to the service control function entity (60); and
a third step (S406) wherein the service control function entity (60) requests for distributing network resource, and returning the URL information of the content to the terminal user if the network resource is distributed successfully, and the content delivery device (70) playing the content for the terminal user;
wherein the next generation network further comprises an application function module (902), wherein the first step (S402) further includes:
the terminal user sending the on-demand request to the service control function entity (60), wherein the on-demand request carries the user information of the terminal user;
the service control function entity (60) authenticating the terminal user according to the user information in the on-demand request, and sending a request message for obtaining the URL information for delivering to the content delivery device (70) through the application function module (902) if the authentication is successful.

7. The content-on-demand method according to Claim 6, wherein in the second step (S404), the content delivery device (70) obtains the URL information in response to the request message for obtaining the URL information for delivering.

8. The content-on-demand method of Claim 6, wherein the next generation network further comprises a resource admittance function entity, wherein
in the third step (S406), the service control function entity (60) requests the resource admittance function entity to distribute the network resource.

9. A content delivery system, wherein the system comprises:
a service control function entity (60), located in a service stratum and connected to a content delivery device (70) and a terminal user, configured to send a request for obtaining the URL information of the content to the content delivery device (70) after the terminal user initiates an on-demand request for playing the corresponding content, to request for the network resource after obtaining the URL information, and to send the URL information to the terminal user after the network resource is distributed successfully; and
a content delivery device (70) according to any of claims 1 - 5, located in the service stratum, configured to respond to the request for obtaining the URL information of the content, to send the URL information to the service control function entity (60), and to play the content for the terminal user after the terminal user receives the URL information;
wherein the service control function entity (60) is further configured to authenticate the terminal user according to the user information of the terminal user carried in the on-demand request, and to send the request for obtaining the URL information of the content to the content delivery device (70) if the authentication is successful.

10. The content delivery system according to Claim 9, further comprising a resource admittance control function entity (80), located in the transmission stratum, configured to distribute the network resource when the service control function entity (60) requests for distributing the network resource, and to notify the distribution result of the network resource to the service control function entity (60).

11. The content delivery system according to Claim 9, further comprising an application support function entity and a service support function entity, wherein the application support function entity and the service support function entity are located in the service stratum and comprise an application function module (902), wherein the application function module (902) is connected to the service control function entity (60) and is configured to forward the request for obtaining the URL information of the content from the service control function entity (60) to the content delivery device (70), and is configured to forward the URL information from the content delivery device (70) to the service control function entity (60).

## Patentansprüche

1. Inhaltsbereitstellungsvorrichtung (70), die verwendet wird, um eine Inhaltsbereitstellungsfunktion im Netz der nächsten Generation auszuführen, wobei das Netz der nächsten Generation eine Übertragungsschicht und eine Dienstschicht umfasst, die Dienstschicht eine Dienststeuerungsfunktionseinheit (60) umfasst, und die Übertragungsschicht eine Übertragungsfunktionseinheit umfasst, wobei
die Inhaltsbereitstellungsvorrichtung (70), die in der Dienstschicht oberhalb der Übertragungsschicht liegt und zwischen der Dienststeuerungsfunktionseinheit (60) und der Übertragungsfunktionseinheit angeschlossen ist, dazu konfiguriert ist, den Inhalt aus einem Anwendungsfunktionsmodul (902) des Netzes der nächsten Generation einem Endgerätebenutzer bereitzustellen;
wobei die Inhaltsbereitstellungsvorrichtung (70) weiter dazu konfiguriert ist, den Inhalt aus dem Anwendungsfunktionsmodul (902) zu verteilen, zu puffern oder zu speichern;
**dadurch gekennzeichnet, dass**
die Inhaltsbereitstellungsvorrichtung (70) ein Inhaltsbereitstellungssteuerungsfunktionsmodul (10) und ein mindestens eines Inhaltsbereitstellungs- und Speicherfunktionsmodul (20) umfasst, wobei
das Inhaltsbereitstellungssteuerungsfunktionsmodul (10) dazu konfiguriert ist, den Betrieb des Inhaltsbereitstellungs- und Speicherfunktionsmoduls (20) zu steuern;
das mindestens eine Inhaltsbereitstellungs- und Speicherfunktionsmodul (20) dazu konfiguriert ist, den Inhalt aus dem Anwendungsfunktionsmodul (902) unter der Steuerung des Inhaltsbereitstellungssteuerungsfunktionsmoduls (10) zu puffern oder zu speichern und den gepufferten oder gespeicherten Inhalt dem Endgerätebenutzer bereitzustellen;
wobei das Inhaltsbereitstellungssteuerungsfunktionsmodul (10) weiter eine Verteilungssteuerungsfunktionseinheit (102) und eine Standortsteuerungsfunktionseinheit (104) umfasst, wobei
die Verteilungssteuerungsfunktionseinheit (102) dazu konfiguriert ist, eine Inhaltsverteilungsstrategie auf Basis eines Dokuments oder Streams zu erstellen, die Inhaltsverteilung unter dem mindestens einen Inhaltsbereitstellungs- und Speicherfunktionsmodul (20) zu verwalten, und die Inhaltsverteilungsstrategie unter Verwendung der Informationen der Standortsteuerungsfunktionseinheit (104) zu optimieren;
die Standortsteuerungsfunktionseinheit (104) dazu konfiguriert ist, ein Inhaltsbereitstellungs- und Speicherfunktionsmodul (20) zu identifizieren, das optimale Standortinformationen aufweist, um dem Endgerätebenutzer den Inhalt gemäß einer voreingestellten Bedingung bereitzustellen.

2. Inhaltsbereitstellungsvorrichtung (70) nach Anspruch 1, wobei die voreingestellte Bedingung mindestens eines aus den Folgenden umfasst: die Verteilungsinformationen des mindestens einen Inhaltsbereitstellungs- und Speicherfunktionsmoduls (20), den Lastzustand des Inhaltsbereitstellungs- und Speicherfunktionsmoduls (20), die Standortinformationen des Endgerätebenutzers, und die Verarbeitungskapazitätsinformationen des Endgerätebenutzers.

3. Inhaltsbereitstellungsvorrichtung (70) nach Anspruch 1, wobei das Inhaltsbereitstellungs- und Speicherfunktionsmodul (20) weiter umfasst:
eine Bereitstellungsfunktionseinheit (202), die dazu konfiguriert ist, den Inhalt, der dem Endgerätebenutzer bereitgestellt werden soll, zu übertragen, um durch den Endgerätebenutzer Inhalt auf das mindestens eine Inhaltsbereitstellungs- und Speicherfunktionsmodul (20) hochzuladen oder Inhalt aus dem mindestens einen Inhaltsbereitstellungs- und Speicherfunktionsmodul (20) herunterzuladen;
eine Verteilungsfunktionseinheit (204), die dazu konfiguriert ist, den Inhalt unter den Inhaltsbereitstellungs- und Speicherfunktionseinheiten zu verteilen und eine Mediensteuerungsnachricht vom Endgerätebenutzer oder der Dienststeuerungsfunktionseinheit (60) zu verarbeiten; und
eine Puffer- und Speicherfunktionseinheit (206), die dazu konfiguriert ist, den verteilten Inhalt zu puffern oder zu speichern.

4. Inhaltsbereitstellungsvorrichtung (70) nach Anspruch 3, wobei die Mediensteuerungsnachricht verwendet wird, um das Inhaltsbereitstellungs- und Speicherfunktionsmodul (20) darüber zu benachrichtigen, mindestens einen der folgenden Vorgänge auszuführen: Wiedergabe, Pause, schnelles Vorspielen und schnelles Zurückspielen.

5. Inhaltsbereitstellungsvorrichtung (70) nach einem der Ansprüche 1 bis 4, wobei es sich bei dem Inhalt um den Inhalt handelt, der vorbereitet und verarbeitet wurde, wobei das Vorbereiten und Verarbeiten mindestens eines aus den Folgenden einschließen: Inhaltsaggregation, Inhaltsverwaltung, Inhaltsverarbeitung, Metadatenverarbeitung, und Inhaltsverschlüsselung, wobei das Vorbereiten und Verarbeiten vom Anwendungsfunktionsmodul (902) oder von einer externen dritten Partei des Netzes der nächsten Generation ausgeführt werden.

6. Inhalt-auf-Abruf-Verfahren, das im Netz der nächsten Generation verwendet wird, wobei das Netz der nächsten Generation einen Endgerätebenutzer, eine Dienststeuerungsfunktionseinheit (60) und die Inhaltsbereitstellungsvorrichtung (70) nach einem der Ansprüche 1 bis 5 umfasst, wobei das Verfahren umfasst:
einen ersten Schritt (S402), bei dem der Endgerätebenutzer eine Auf-Abruf-Anfrage initiiert, um entsprechenden Inhalt wiederzugeben;
einen zweiten Schritt (S404), bei dem die Inhaltsbereitstellungsvorrichtung (70) die URL-Informationen des Inhalts erhält und die URL-Informationen an die Dienststeuerungsfunktionseinheit (60) zurückgibt; und
einen dritten Schritt (S406), bei dem die Dienststeuerungsfunktionseinheit (60) um Verteilung einer Netzressource anfragt und die URL-Informationen des Inhalts dem Endgerätebenutzer zurückgibt, wenn die Netzressource erfolgreich verteilt wird, und die Inhaltsbereitstellungsvorrichtung (70) den Inhalt für den Endgerätebenutzer wiedergibt;
wobei das Netz der nächsten Generation weiter ein Anwendungsfunktionsmodul (902) umfasst, wobei der erste Schritt (S402) weiter einschließt:
Senden der Auf-Abruf-Anfrage durch den Endgerätebenutzer an die Dienststeuerungsfunktionseinheit (60), wobei die Auf-Abruf-Anfrage die Benutzerinformationen des Endgerätebenutzers übermittelt;
Authentifizieren des Endgerätebenutzers durch die Dienststeuerungsfunktionseinheit (60) gemäß den Benutzerinformationen in der Auf-Abruf-Anfrage, und Senden einer Anfragenachricht zum Erhalten der URL-Informationen für Bereitstellung über das Anwendungsfunktionsmodul (902) an die Inhaltsbereitstellungsvorrichtung (70), wenn die Authentifizierung erfolgreich ist.

7. Inhalt-auf-Abruf-Verfahren nach Anspruch 6, wobei die Inhaltsbereitstellungsvorrichtung (70) im zweiten Schritt (S404) die URL-Informationen in Antwort auf die Anfragenachricht zum Erhalten der URL-Informationen für Bereitstellung erhält.

8. Inhalt-auf-Abruf-Verfahren nach Anspruch 6, wobei das Netz der nächsten Generation weiter eine Ressourcengewährungsfunktionseinheit umfasst, wobei
die Dienststeuerungsfunktionseinheit (60) im dritten Schritt (S406) die Ressourcengewährungsfunktionseinheit dazu auffordert, die Netzressource zu verteilen.

9. Inhaltsbereitstellungssystem, wobei das System umfasst:
eine Dienststeuerungsfunktionseinheit (60), die in einer Dienstschicht liegt und an eine Inhaltsbereitstellungsvorrichtung (70) und einen Endgerätebenutzer angeschlossen ist, die dazu konfiguriert ist, eine Anfrage zum Erhalten der URL-Informationen des Inhalts an die Inhaltsbereitstellungsvorrichtung (70) zu senden, nachdem der Endgerätebenutzer eine Auf-Abruf-Anfrage initiiert, um den entsprechenden Inhalt wiederzugeben, nach Erhalten der URL-Informationen um die Netzressource anzufragen und die URL-Informationen an den Endgerätebenutzer zu senden, nachdem die Netzressource erfolgreich verteilt wurde; und
eine in der Dienstschicht liegende Inhaltsbereitstellungsvorrichtung (70) nach einem der Ansprüche 1 bis 5, die dazu konfiguriert ist, auf die Anfrage zum Erhalten der URL-Informationen des Inhalts zu antworten, die URL-Informationen an die Dienststeuerungsfunktionseinheit (60) zu senden, und den Inhalt für den Endgerätebenutzer wiederzugeben, nachdem der Endgerätebenutzer die URL-Informationen empfängt;
wobei die Dienststeuerungsfunktionseinheit (60) weiter dazu konfiguriert ist, den Endgerätebenutzer gemäß den in der Auf-Abruf-Anfrage übermittelten Benutzerinformationen des Endgerätebenutzers zu authentifizieren und die Anfrage zum Erhalten der URL-Informationen des Inhalts an die Inhaltsbereitstellungsvorrichtung (70) zu senden, wenn die Authentifizierung erfolgreich ist.

10. Inhaltsbereitstellungssystem nach Anspruch 9, weiter eine in der Übertragungsschicht liegende Ressourcengewährungssteuerungsfunktionseinheit (80) umfassend, die dazu konfiguriert ist, die Netzressource zu verteilen, wenn die Dienststeuerungsfunktionseinheit (60) um Verteilung der Netzressource fragt, und die Dienststeuerungsfunktionseinheit (60) über das Verteilungsergebnis der Netzressource zu benachrichtigen.

11. Inhaltsbereitstellungssystem nach Anspruch 9, weiter eine Anwendungsunterstützungsfunktionseinheit und eine Dienstunterstützungsfunktionseinheit umfassend, wobei die Anwendungsunterstützungsfunktionseinheit und die Dienstunterstützungsfunktionseinheit in der Dienstschicht liegen und ein Anwendungsfunktionsmodul (902) umfassen, wobei das Anwendungsfunktionsmodul (902) an die Dienststeuerungsfunktionseinheit (60) angeschlossen und dazu konfiguriert ist, die Anfrage zum Erhalten der URL-Informationen des Inhalts von der Dienststeuerungsfunktionseinheit (60) an die Inhaltsbereitstellungsvorrichtung (70) weiterzuleiten, und dazu konfiguriert ist, die URL-Informationen von der Inhaltsbereitstellungsvorrichtung (70) an die Dienststeuerungsfunktionseinheit (60) weiterzuleiten.

## Revendications

1. Dispositif de diffusion de contenu (70), utilisé pour réaliser une fonction de diffusion de contenu dans le réseau de prochaine génération, dans lequel le réseau de prochaine génération comprend une strate de transmission et une strate de service, la strate de service comprend une entité de fonction de commande de service (60), et la strate de transmission comprend une entité de fonction de transmission, dans lequel
le dispositif de diffusion de contenu (70), situé dans la strate de service au-dessus de la strate de transmission et connecté entre l'entité de fonction de commande de service (60) et l'entité de fonction de transmission, est configuré pour diffuser le contenu d'un module de fonction d'application (902) du réseau de prochaine génération à un utilisateur de terminal ;
dans lequel le dispositif de diffusion de contenu (70) est en outre configuré pour distribuer, mettre en tampon ou stocker le contenu du module de fonction d'application (902) ;
**caractérisé en ce que**
le dispositif de diffusion de contenu (70) comprend un module de fonction de commande de diffusion de contenu (10) et un au moins un module de fonction de stockage et de diffusion de contenu (20), dans lequel,
le module de fonction de commande de diffusion de contenu (10) est configuré pour commander le fonctionnement du module de fonction de stockage et de diffusion de contenu (20) ;
l'au moins un module de fonction de stockage et de diffusion de contenu (20) est configuré pour mettre en tampon ou stocker le contenu du module de fonction d'application (902) sous la commande du module de fonction de commande de diffusion de contenu (10), et diffuser le contenu mis en tampon ou stocké à l'utilisateur de terminal ;
dans lequel le module de fonction de commande de diffusion de contenu (10) comprend en outre une entité de fonction de commande de distribution (102) et une entité de fonction de commande de localisation (104), dans lequel
l'entité de fonction de commande de distribution (102) est configurée pour établir une stratégie de distribution de contenu basée sur un document ou un flux, gérer la distribution de contenu parmi l'au moins un module de fonction de stockage et de diffusion de contenu (20), et optimiser la stratégie de distribution de contenu en utilisant les informations de l'entité de fonction de commande de localisation (104) ;
l'entité de fonction de commande de localisation (104) est configurée pour identifier un module de fonction de stockage et de diffusion de contenu (20) qui a des informations de localisation optimum pour diffuser le contenu à l'utilisateur de terminal selon une condition prédéfinie.

2. Dispositif de diffusion de contenu (70) selon la revendication 1, dans lequel la condition prédéfinie comprend au moins l'un de ce qui suit : les informations de distribution de l'au moins un module de fonction de stockage et de diffusion de contenu (20), le statut de chargement du module de fonction de stockage et de diffusion de contenu (20), les informations de localisation de l'utilisateur de terminal, et les informations de capacité de traitement de l'utilisateur de terminal.

3. Dispositif de diffusion de contenu (70) selon la revendication 1, dans lequel le module de fonction de stockage et de diffusion de contenu (20) comprend en outre :
une entité de fonction de diffusion (202), configurée pour transmettre le contenu à diffuser à l'utilisateur de terminal, pour téléverser un contenu vers l'au moins un module de fonction de stockage et de diffusion de contenu (20) ou pour télécharger un contenu depuis l'au moins un module de fonction de stockage et de diffusion de contenu (20) par l'utilisateur de terminal ;
une entité de fonction de distribution (204), configurée pour distribuer le contenu entre les entités de fonction de diffusion de contenu et de stockage, et traiter un message de commande de média de l'utilisateur de terminal ou de l'entité de fonction de commande de service (60) ; et
une entité de fonction de stockage et de tampon (206) configurée pour mettre en tampon ou stocker le contenu distribué.

4. Dispositif de diffusion de contenu (70) selon la revendication 3, dans lequel le message de commande de média est utilisé pour notifier au module de fonction de stockage et de diffusion de contenu (20) d'exécuter au moins l'une des opérations suivantes : lecture, pause, avance rapide et retour rapide.

5. Dispositif de diffusion de contenu (70) selon l'une quelconque des revendications 1 à 4, dans lequel le contenu est le contenu ayant été préparé et traité, la préparation et le traitement incluent au moins l'un de ce qui suit : agrégation de contenu, gestion de contenu, traitement de contenu, traitement de métadonnées, et chiffrement de contenu, la préparation et le traitement sont exécutés par le module de fonction d'application (902) ou par un tiers externe du réseau de prochaine génération.

6. Procédé de contenu à la demande, utilisé dans le réseau de prochaine génération, le réseau de prochaine génération comprenant un utilisateur de terminal, une entité de fonction de commande de service (60) et le dispositif de diffusion de contenu (70) selon l'une quelconque des revendications 1 à 5, dans lequel le procédé comprend :
une première étape (S402) dans laquelle l'utilisateur de terminal lance une requête à la demande pour lire un contenu correspondant ;
une deuxième étape (S404) dans laquelle le dispositif de diffusion de contenu (70) obtient les informations URL du contenu, et retourne les informations URL à l'entité de fonction de commande de service (60) ; et
une troisième étape (S406) dans laquelle l'entité de fonction de commande de service (60) demande la distribution de ressource de réseau, et retourne les informations URL du contenu à l'utilisateur de terminal si la ressource de réseau est distribuée avec succès, et le dispositif de diffusion de contenu (70) lit le contenu pour l'utilisateur de terminal ;
dans lequel le réseau de prochaine génération comprend en outre un module de fonction d'application (902), dans lequel la première étape (S402) inclut en outre :
l'envoi par l'utilisateur de terminal de la requête à la demande à l'entité de fonction de commande de service (60), dans lequel la requête à la demande achemine les informations d'utilisateur de l'utilisateur de terminal ;
l'authentification par l'entité de fonction de commande de service (60) de l'utilisateur de terminal selon les informations d'utilisateur dans la requête à la demande, et l'envoi d'un message de requête pour obtenir les informations URL pour la diffusion au dispositif de diffusion de contenu (70) par l'intermédiaire du module de fonction d'application (902) si l'authentification réussit.

7. Procédé de contenu à la demande selon la revendication 6, dans lequel dans la deuxième étape (S404), le dispositif de diffusion de contenu (70) obtient les informations URL en réponse au message de requête pour obtenir les informations URL pour la diffusion.

8. Procédé de contenu à la demande selon la revendication 6, dans lequel le réseau de prochaine génération comprend en outre une entité de fonction d'admission de ressource, dans lequel
dans la troisième étape (S406), l'entité de fonction de commande de service (60) demande à l'entité de fonction d'admission de ressource de distribuer la ressource de réseau.

9. Système de diffusion de contenu, dans lequel le système comprend :
une entité de fonction de commande de service (60), située dans une strate de service et connectée à un dispositif de diffusion de contenu (70) et à un utilisateur de terminal, configurée pour envoyer une requête pour obtenir les informations URL du contenu au dispositif de diffusion de contenu (70) après que l'utilisateur de terminal a lancé une requête à la demande pour lire le contenu correspondant, pour demander la ressource de réseau après avoir obtenu les informations URL, et pour envoyer les informations URL à l'utilisateur de terminal après que la ressource de réseau a été distribuée avec succès ; et
un dispositif de diffusion de contenu (70) selon l'une quelconque des revendications 1 à 5, situé dans la strate de service, configuré pour répondre à la requête pour obtenir les informations URL du contenu, pour envoyer les informations URL à l'entité de fonction de commande de service (60), et pour lire le contenu pour l'utilisateur de terminal après que l'utilisateur de terminal a reçu les informations URL ;
dans lequel l'entité de fonction de commande de service (60) est en outre configurée pour authentifier l'utilisateur de terminal selon les informations d'utilisateur de l'utilisateur de terminal acheminées dans la requête à la demande, et pour envoyer la requête pour obtenir les informations URL du contenu au dispositif de diffusion de contenu (70) si l'authentification réussit.

10. Système de diffusion de contenu selon la revendication 9, comprenant en outre une entité de fonction de commande d'admission de ressource (80), située dans la strate de transmission, configurée pour distribuer la ressource de réseau lorsque l'entité de fonction de commande de service (60) demande la distribution de la ressource de réseau, et pour notifier le résultat de distribution de la ressource réseau à l'entité de fonction de commande de service (60) .

11. Système de diffusion de contenu selon la revendication 9, comprenant en outre une entité de fonction de support d'application et une entité de fonction de support de service, dans lequel l'entité de fonction de support d'application et l'entité de fonction de support de service sont situées dans la strate de service et comprennent un module de fonction d'application (902), dans lequel le module de fonction d'application (902) est connecté à l'entité de fonction de commande de service (60) et est configuré pour transférer la requête pour obtenir les informations URL du contenu de l'entité de fonction de commande de service (60) au dispositif de diffusion de contenu (70), et est configuré pour transférer les informations URL du dispositif de diffusion de contenu (70) à l'entité de fonction de commande de service (60).
